**Europäisches Patentamt**

**European Patent Office**

**Office européen des brevets**

(19)

(11) Numéro de publication : **0 362 058 B1**

(12)

# FASCICULE DE BREVET EUROPEEN

(45) Date de publication du fascicule du brevet :
02.09.92 Bulletin 92/36

(51) Int. Cl.⁵ : **A47J 19/02**

(21) Numéro de dépôt : **89402651.7**

(22) Date de dépôt : **27.09.89**

(54) **Presse-agrumes à dôme et robot électroménager s'y rapportant.**

(30) Priorité : **30.09.88 FR 8812817**

(43) Date de publication de la demande :
**04.04.90 Bulletin 90/14**

(45) Mention de la délivrance du brevet :
**02.09.92 Bulletin 92/36**

(84) Etats contractants désignés :
**AT BE CH DE ES GB IT LI NL**

(56) Documents cités :
**EP-A- 0 021 974
FR-A- 1 219 464
US-A- 1 661 522
US-A- 2 300 494
US-A- 2 552 572**

(73) Titulaire : **SEB S.A. (Société Anonyme
Française)
F-21260 Selongey (FR)**

(72) Inventeur : **Maurin, Thierry
25 Lotissement Pailhès
F-65430 Soues (FR)**

(74) Mandataire : **Bouju, André
Cabinet Bouju Derambure (Bugnion) S.A. B.P.
6250
F-75818 Paris Cédex 17 (FR)**

Jouve, 18, rue Saint-Denis, 75001 PARIS

# Description

La présente invention concerne un presse-agrumes, à usage ménager ou professionnel, pour l'extraction du jus des agrumes (citrons, oranges, pamplemousses, etc...).

L'invention concerne également l'application d'un tel presse-agrumes à un appareil électroménager rotatif du genre robot.

Dans la pratique, soit qu'il s'agisse d'un presse-agrumes manuel, soit qu'il s'agisse d'un presse-agrumes mécanique dans lequel le dôme est entraîné à une vitesse de rotation lente autour de son axe, l'utilisateur doit exercer une force relativement importante sur la moitié d'agrume à traiter. Néanmoins, le taux d'extraction du fruit reste généralement faible, soit que de nombreuses cellules juteuses n'aient pas été écrasées, soit au contraire que les membranes intérieures du fruit aient été arrachées, ce qui tend à boucher le tamis de filtration et à retenir le jus extrait.

On connaît selon l'US-A-2 300 494 un presse-agrumes conforme au préambule de la revendication 1.

Un premier but de l'invention est de réaliser un presse-agrumes au moyen duquel l'utilisateur peut extraire la quasi-totalité du jus, en exerçant sur le demi-fruit à presser, une pression modérée, cette action s'exerçant dans une direction constante.

Un autre but de l'invention est d'obtenir très rapidement et sans effort un jus d'agrumes avec un accessoire adaptable à un appareil électroménager du type robot culinaire, tournant à vitesse élevée, tout en assurant une totale sécurité à l'utilisateur.

Suivant l'invention, le presse-agrumes dont la partie active est constituée par un dôme à la surface extérieure duquel sont ménagées des nervures convergeant en direction du sommet du dôme est caractérisé en ce qu'une partie au moins des nervures se rejoignent en un point situé au sommet du dôme et décalé latéralement par rapport à l'axe de symétrie du dôme.

L'expérience a en effet montré que ce décentrage du point de convergence des nervures par rapport au sommet géométrique de la surface du dôme facilitait la pénétration du dôme dans le demi-fruit en assurant une sorte de destruction par usinage de membranes ligneuses situées dans l'axe de l'agrume. L'extraction de jus est ainsi considérablement renforcée.

Dans le cas d'un presse-agrumes à entraînement mécanique, l'invention prévoit avantageusement de monter rotativement le dôme autour de son axe de symétrie, alors que les nervures sont régulièrement réparties autour d'un axe décalé latéralement par rapport au précédent, les deux axes étant de préférence parallèles et les nervures se déployant hélicoïdalement à la surface du dôme autour du second axe. Une telle structure peut être facilement réalisée par moulage et se révèle très efficace.

L'expérience a montré que des résultats particulièrement intéressants étaient obtenus avec des nervures de faibles largeur et hauteur par rapport aux dimensions du dôme et présentant une section sensiblement triangulaire, arrondie à son sommet.

L'invention vise encore l'application d'un presse-agrumes rotatif à entraînement mécanique tel que défini ci-dessus à un appareil électroménager du genre robot, cette application étant caractérisée en ce que le dôme est monté rotativement sur un accessoire du robot comportant une grille de filtration de la pulpe, des moyens étant prévus pour fixer de façon amovible cet accessoire sur la cuve du robot et d'autres moyens d'accouplement amovible direct étant ménagés entre le dôme et l'arbre moteur pour entraîner ce dôme à la vitesse de rotation normale du robot, généralement comprise entre 2 000 et 2 500 tours/minute.

L'expérience a en effet montré ce résultat surprenant qu'il n'était pas nécessaire de prévoir un réducteur de vitesse sur le robot, la structure du dôme assurant une excellente extraction du jus sans destruction de la peau extérieure, malgré la vitesse de rotation élevée.

De préférence, le robot à usage de presse-agrumes ainsi réalisé est de plus tel que le socle de l'accessoire sur lequel est monté le dôme comporte une patte venant fermer un contact de sécurité disposé sur le corps du robot lorsque le socle précité est convenablement mis en place et verrouillé sur cette cuve.

D'autres particularités de l'invention résulteront de la description qui va suivre.

Aux dessins annexés, donnés à titre d'exemples non limitatifs, on a représenté diverses réalisations de l'invention. Sur ces dessins :

– la figure 1 est une vue en élévation d'une première réalisation de presse-agrumes à entraînement mécanique, le dôme étant vu en élévation et le bac annulaire de collecte vu en coupe diamétrale selon I-I de la figure 2;

– la figure 2 est la vue en plan correspondante du dôme, le bac de collecte étant en partie arraché ;

– la figure 3 est une vue en coupe axiale du dôme du presse-agrumes des figures 1 et 2 supposé isolé ;

– la figure 4 est une vue de dessus agrandie de la partie centrale de la figure 2 ;

– la figure 5 est une vue agrandie d'une nervure du dôme, en coupe partielle selon V-V de la figure 4 ;

– la figure 6 est une vue analogue à la figure 5 après coupe selon VI-VI de la figure 4 ;

– la figure 7 est une vue en coupe à grande échelle, selon VII-VII de la figure 4, du sommet du dôme et du point de croisement des nervures ;

– la figure 8 est une vue en perspective montrant l'application de l'invention à un robot ménager ; et

– la figure 9 est une vue très schématique en coupe par un plan diamétral de la réalisation de la figure 8.

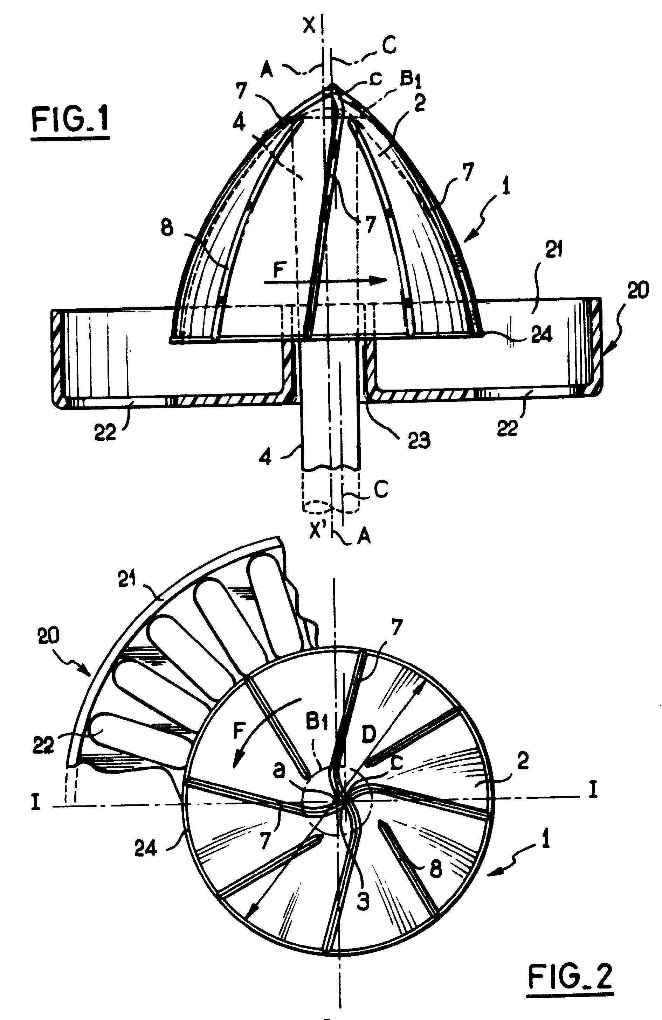

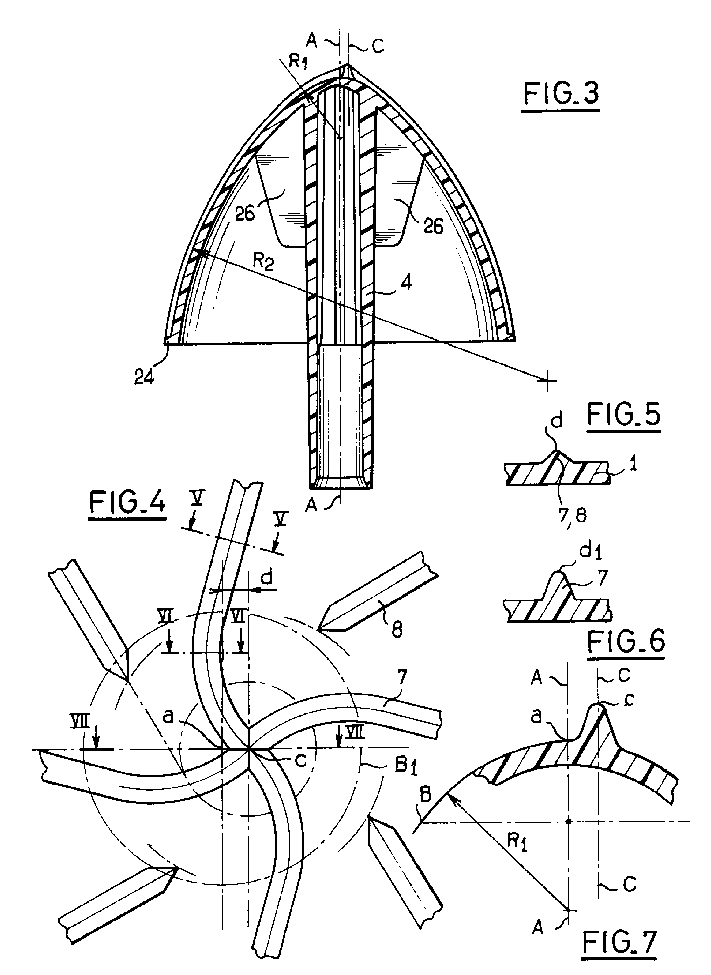

Dans la réalisation des figures 1 à 7 des dessins annexés on a montré l'application de l'invention à un presse-agrumes rotatif à entraînement mécanique. L'appareil comprend de façon connue un socle 20, par exemple en matière moulée, formant un bac annulaire 21 dont le fond présente des perforations 22 pour la filtration et l'écoulement du jus des fruits pressés. Le socle 20 est muni en son centre d'une partie tubulaire 23 pour le passage de l'arbre axial 4 d'un dôme rotatif creux 1 dont la base 24 recouvre la partie tubulaire 23. Comme on le voit sur la figure 3, l'arbre 4 est creux, il présente un évidement de section hexagonale et sa liaison avec le dôme 1 est assurée par des éléments radiaux 26. La section hexagonale de l'évidement axial de l'arbre 4 permet l'entraînement de ce dernier par simple emmanchement dans la prise de force de section homologue d'un moteur électrique non figuré.

On a désigné par A-A l'axe géométrique de la surface lisse 2 du dôme 1 (ci-après désigné par axe du dôme) ; cette surface 2, de révolution autour de l'axe A-A, dans l'exemple décrit, a pour génératrice deux cercles de rayons respectifs $R_1$ et $R_2$ raccordés en B (voir figure 7), de sorte que la surface 2 a une forme en pain de sucre dont le sommet 3 est sur l'axe A-A.

Sur la surface 2 sont ménagées des nervures 7 et 8. Conformément à l'invention, les nervures 7 et 8 sont régulièrement réparties et se déploient hélicoïdalement autour d'un axe C-C décalé latéralement par rapport à l'axe A-A et qui lui est parallèle. La distance $\underline{d}$ entre les axes A-A et C-C est de préférence comprise entre 2 et 8 % du diamètre D de la base 24 du dôme 1.

Les nervures 7, qui se rencontrent en un point $\underline{c}$, dit sommet des nervures et situé sur l'axe C-C, présentent en plan, comme on le voit sur les figures 2 et 4 une forme inflexionnelle, sensiblement à partir du cercle parallèle $B_1$ passant par le point B défini plus haut. Le sommet $\underline{c}$ des nervures 7 est ainsi décalé par rapport au sommet $\underline{a}$ du dôme 1.

Les nervures 8 régulièrement réparties entre les nervures 7 et de même disposition s'arrêtent par contre à hauteur du cercle $B_1$.

Les nervures 7 et 8, entre le cercle $B_1$ et la base 24 du dôme 1, forment un angle faible avec l'axe C-C, de l'ordre par exemple de 10°.

Selon une réalisation préférée, les nervures 7 et 8 présentent une section droite sensiblement triangulaire (figures 5 et 6) dont le sommet $\underline{d}$ est arrondi. A mi-hauteur, (figure 5) l'angle au sommet des nervures 7 ou 8 est sensiblement droit, mais la hauteur des nervures 7 au-delà du cercle $B_1$ croît progressivement. Au voisinage du sommet $\underline{c}$ la hauteur des nervures 7 est par exemple le triple de la précédente, l'angle au sommet $d_1$ étant aigu comme on le voit figure 6.

A titre d'exemple, dans une réalisation particulière le diamètre D du dôme 1 est de 100 mm environ, la hauteur du sommet $\underline{a}$ est de 70 mm, la largeur des nervures 7 ou 8 de 2,4 mm et leur hauteur de 1 mm. Au sommet, la hauteur des nervures 7 est de 3 à 3,5 mm. La distance $\underline{d}$ d'excentration du sommet $\underline{c}$ des nervures par rapport au sommet $\underline{a}$ du dôme est d'environ 2,5 mm, soit environ 2,5 % du diamètre D.

Pour extraire le jus d'un demi-fruit, on appuie celui-ci sur le dôme 1, entraîné en rotation dans le sens F qui correspond au vissage des nervures 7 et 8 à l'intérieur du fruit. L'expérience a montré ce résultat surprenant que le décentrage des nervures permettait de faire tourner le dôme 1 à grande vitesse (un à plusieurs milliers de tours/minute) sans détruire la peau du fruit, mais au contraire en brisant les membranes ligneuses au voisinage de l'axe du fruit, ce qui permet aux nervures 7 et 8 de faire éclater les cellules juteuses. L'invention assure ainsi une excellente extraction du jus avec des moyens très simples et en créant un minimum de débris susceptibles d'obturer la grille de filtration.

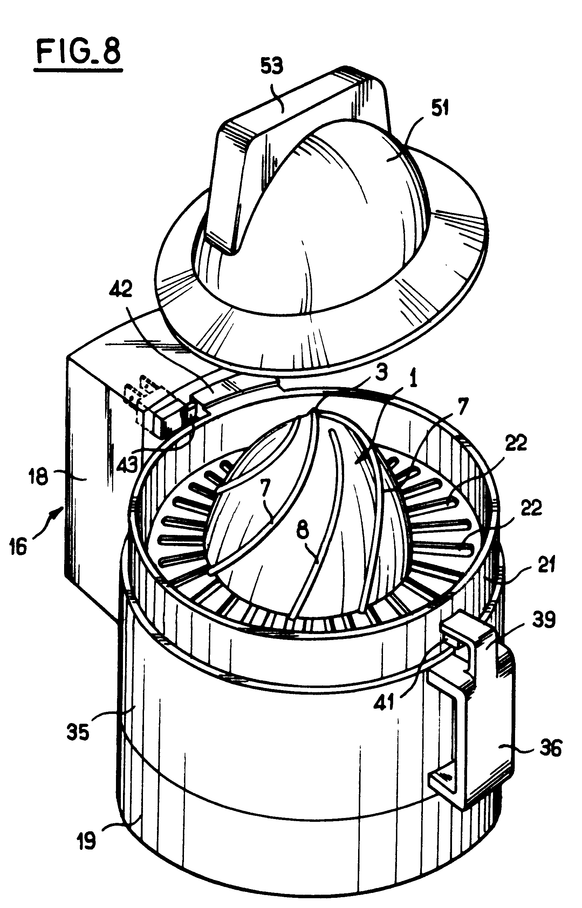

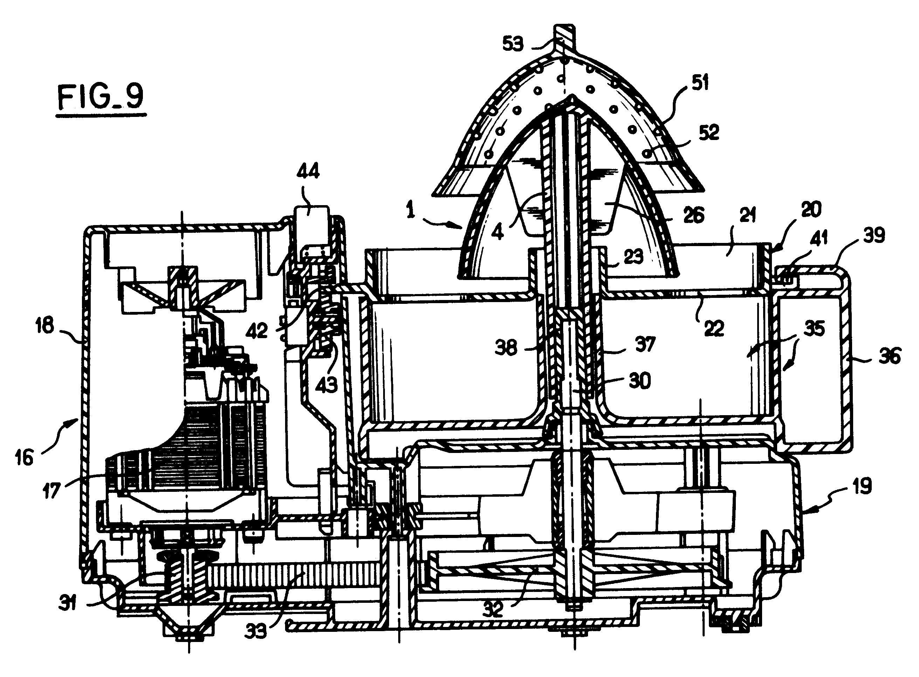

Cette faculté du presse-agrumes présentant une structure telle que définie ci-dessus de pouvoir être entraîné à grande vitesse sans danger pour l'utilisateur et avec un taux d'extraction élevé permet d'appliquer l'invention à un robot électroménager et de transformer celui-ci en presse-agrumes par adjonction sous forme d'accessoire du dispositif visé aux figures 1 à 7, sans qu'il soit nécessaire d'interposer un réducteur de vitesse entre l'accessoire et la prise de force du robot. Une telle application est illustrée aux figures 8 et 9.

Sur ces figures, on reconnaît un robot 16 avec son bloc moteur 17 logé dans un compartiment latéral 18 et sa base 19 traversée par l'arbre d'entraînement 30, lui-même mis en rotation par des poulies 31, 32 reliées par une courroie 33.

Sur la base 19 est fixée de manière amovible par tous moyens connus la cuve 35 du robot munie d'une poignée 36 et qui reçoit sur son bord supérieur le socle 20 du presse-agrumes, tel par exemple que visé aux figures 1 à 7.

La cuve 35 traversée par une cheminée centrale 37 pour l'arbre 30 dont l'extrémité porte un manchon d'accouplement hexagonal 38 auquel s'adapte l'extrémité creuse de l'arbre 4 du dôme 1.

La fixation du socle 20 sur le bord de la cuve 35 est assurée par un système à baïonnette schématisé figure 9 (oreilles 39 solidaires de la cuve 35 et goujons 41 solidaires du socle 20 amenés en prise par rotation de ce socle).

Il est encore prévu que le socle 20 comporte une patte 42 venant fermer un contact de sécurité 43 disposé dans le compartiment 18 lorsque le socle 20 est convenablement mis en place et verrouillé sur la cuve 35. Le contact 43 est monté en série avec le contact 44 à bouton-poussoir pour l'actionnement manuel du moteur 17.

L'équipement du robot a usage de presse-agrumes ainsi constitué est complété par un chapeau amovible 51, creusé intérieurement, muni de picots 52, et pourvu d'un organe de préhension 53 permettant de maintenir l'agrume appuyé sur le dôme pendant sa rotation.

L'expérience a montré que le dôme 1 pouvait être entraîné à une vitesse de 2 000 à 2 500 tours/minute, vitesse de rotation usuelle de l'arbre 30, tout en assurant l'extraction du jus des agrumes dans les conditions d'efficacité et de sécurité pour l'utilisateur exposées plus haut.

## Revendications

1. Presse-agrumes dont la partie active est constituée par un dôme (1) à la surface extérieure duquel sont ménagées des nervures (7, 8) convergeant en direction du sommet du dôme, caractérisé en ce qu'une partie au moins des nervures (7) se rejoignent en un point ($\underline{c}$) situé au sommet du dôme et décalé latéralement par rapport à l'axe de symétrie (A-A) du dôme (1).

2. Presse-agrumes conforme à la revendication 1, du genre à entraînement mécanique, caractérisé en ce que le dôme (1) est monté rotativement autour de son axe de symétrie (A-A), alors que les nervures (7, 8) sont régulièrement réparties autour d'un axe (C-C) décalé latéralement par rapport au précédent (A-A').

3. Presse-agrumes conforme à la revendication 2, caractérisé en ce que l'axe (A-A) de symétrie du dôme et l'axe (C-C) autour duquel se déploient les nervures sont parallèles.

4. Presse-agrumes conforme à l'une des revendications 1 à 3, caractérisé en ce que le point ($\underline{c}$) des nervures (7) est décalé par rapport au sommet ($\underline{a}$) du dôme (1) d'une distance ($\underline{d}$) sensiblement comprise entre 2 et 8% du diamètre (D) à la base (24) du dôme (1).

5. Presse-agrumes conforme à l'une des revendications 1 à 4, caractérisé en ce que les nervures (7) convergeant vers le point ($\underline{c}$) sont réparties suivant des tracés sensiblement hélicoïdaux à la surface du dôme (1).

6. Presse-agrumes conforme à l'une des revendications 1 à 5, caractérisé en ce que les nervures présentent une section sensiblement triangulaire arrondie à son sommet.

7. Presse-agrumes conforme à l'une des revendications 1 à 6, caractérisé en ce que la hauteur des nervures (7, 8) croît à la base du dôme vers le point ($\underline{c}$).

8. Application d'un presse-agrumes conforme à l'une des revendications 1 à 7 à un appareil électroménager du genre robot, caractérisé en ce que le dôme (1) est monté rotativement sur un accessoire comportant des perforations (22) pour la filtration de la pulpe, des moyens (39, 41) étant prévus pour fixer de façon amovible cet accessoire sur une cuve (35) du robot et d'autres moyens d'accouplement amovible direct (38, 4) étant ménagés entre le dôme (1) et l'arbre moteur (30) du robot pour entraîner ce dôme (1) à la vitesse de rotation normale du robot, généralement comprise entre 2 000 et 2 500 tours/minute.

9. Robot domestique conforme à la revendication 8, caractérisé en ce que le socle (20) de l'accessoire sur lequel est monté le dôme (1) comporte une patte (42) venant fermer un contact de sécurité (43) disposé sur le corps du robot lorsque le socle précité est convenablement mis en place et verrouillé sur la cuve (35) du robot.

10. Presse-agrumes conforme à l'une des revendications 1 à 7 ou robot domestique conforme à l'une des revendications 8 ou 9, caractérisé en ce qu'il comporte un chapeau amovible (51), creusé intérieurement et pourvu d'un organe de préhension (53) permettant de maintenir l'agrume appuyé sur le dôme (1).

## Patentansprüche

1. Fruchtpresse, deren aktiver Teil von einer Haube (1) gebildet wird, auf deren Außenseite Rippen (7, 8) vorgesehen sind, die in Richtung der Spitze der Haube zusammenlaufen, dadurch gekennzeichnet, daß wenigstens einige der Rippen (7) in einem Punkt ($\underline{c}$) zusammentreffen, der sich auf der Spitze der Haube befindet und in bezug auf die Symmetrieachse (A-A) der Haube (1) seitlich verschoben ist.

2. Fruchtpresse gemäß Anspruch 1 vom Typ mit mechanischem Antrieb, dadurch gekennzeichnet, daß die Haube (1) um ihre Symmetrieachse (A-A) drehbar angebracht ist, während die Rippen (7, 8) um die Achse (C-C), die in bezug auf die vorhergehende (A-A) seitlich verschoben ist, regelmäßig verteilt sind.

3. Fruchtpresse gemäß Anspruch 2, dadurch gekennzeichnet, daß die Symmetrieachse (A-A) der Haube und die Achse (C-C), um die sich die Rippen erstrecken, parallel sind.

4. Fruchtpresse gemäß einem der Ansprüche 1 bis 3, dadurch gekennzeichnet, daß der Punkt (c) der Rippen (7) in bezug auf die Spitze (a) der Haube (1) um einen Abstand (d) verschoben ist, der im wesentlichen zwischen 2 und 8% des Durchmessers (D) der Grundfläche (24) der Haube (1) liegt.

5. Fruchtpresse gemäß einem der Ansprüche 1 bis 4, dadurch gekennzeichnet, daß die Rippen (7), die im Punkt (c) zusammenlauten, auf im wesentlichen spiralförmigen Linien auf der Oberfläche der Haube (1) verteilt sind.

6. Fruchtpresse gemäß einem der Ansprüche 1 bis 5, dadurch gekennzeichnet, daß die Rippen einen Querschnitt besitzen, der im wesentlichen die Form eines Dreiecks mit abgerundeter Spitze besitzt.

7. Fruchtpresse gemäß einem der Ansprüche 1 bis 6, dadurch gekennzeichnet, daß die Höhe der Rippen (7, 8) von der Grundfläche der Haube zum Punkt (c) anwächst.

8. Anwendung einer Fruchtpresse gemäß einem der Ansprüche 1 bis 7 auf ein Elektrogerät vom Typ einer Küchenmaschine, dadurch gekennzeichnet, daß die Haube (1) auf einem Zusatzgerät drehbar angebracht ist, das Lochungen (22) für die Filterung des Fruchtfleisches aufweist, wobei Mittel (39, 41) vorgesehen sind, um dieses Zusatzgerät abnehmbar auf einer Schüssel (35) der Küchenmaschine zu befestigen, und zwischen der Haube (1) und der Motorwelle (30) der Küchenmaschine weitere Mittel zur direkten, lösbaren Kupplung (38, 4) vorgesehen sind, um diese Haube (1) mit der normalen Drehgeschwindigkeit der Küchenmaschine, die im allgemeinen zwischen 2000 und 2500 Umdrehungen/Minute liegt, anzutreiben.

9. Küchenmaschine gemäß Anspruch 8, dadurch gekennzeichnet, daß der Sockel (20) des Zusatzgerätes, auf dem die Haube (1) angebracht ist, einen Ansatz (42) aufweist, der einen am Körper der Küchenmaschine angeordneten Sicherheitskontakt (43) schließt, wenn der erwähnte Sockel richtig auf der Schüssel (35) der Küchenmaschine aufgesetzt und verriegelt ist.

10. Fruchtpresse gemäß einem der Ansprüche 1 bis 7 oder Küchenmaschine gemäß einem der Ansprüche 8 oder 9, dadurch gekennzeichnet, daß sie/er eine abnehmbare Abdeckung (51) aufweist, die innen hohl ist und mit einem Griffelement (53) versehen ist, wodurch es möglich ist, die Frucht gegen die Haube (1) zu halten.

## Claims

1. Citrus-fruit squeezer having an active portion constituted by a dome (1) and by ribs (7, 8) which are formed on its external surface and which converge towards the apex of the dome, characterized in that at least some of the ribs (7) meet at a point (c) which is located at the apex of the dome and displaced laterally with respect to the axis of symmetry (A-A) of the dome (1)

2. Citrus-fruit squeezer in accordance with claim 1 of the mechanical drive type, characterized in that the dome (1) is mounted so as to be capable of rotating about its axis of symmetry (A-A) whilst the ribs (7, 8) are uniformly spaced about an axis (C-C) which is displaced laterally with respect to the above-mentioned axis (A-A').

3. Citrus-fruit squeezer in accordance with claim 2, characterized in that the axis (A-A) of symmetry of the dome and the axis (C-C) about which the ribs extend outwards are parallel.

4. Citrus-fruit squeezer in accordance with one of claims 1 to 3, characterized in that the point (c) of the ribs (7) is displaced with respect to the apex (a) of the dome (1) through a distance (d) substantially within the range of 2 to 8 % of the diameter (D) at the base (24) of the dome (1).

5. Citrus-fruit squeezer in accordance with one of claims 1 to 4, characterized in that the ribs (7) which converge towards the point (c) are disposed in spaced relation along substantially helical paths at the surface of the dome (1).

6. Citrus-fruit squeezer in accordance with one of claims 1 to 5, characterized in that the ribs have a substantially triangular cross-section which is rounded at its summit.

7. Citrus-fruit squeezer in accordance with one of claims 1 to 6, characterized in that the height of the ribs (7, 8) increases from the base of the dome to the point (c).

8. Application of a citrus-fruit squeezer in accordance with one of claims 1 to 7 to a domestic electrical appliance of the robot type, characterized in that the dome (1) is rotatably mounted on an accessory provided with perforations (22) for filtration of the pulp, means (39, 41) being provided for removably fixing said accessory on a vessel (35) of the robot and other removable direct coupling means (38, 4) being arranged between the dome (1) and the drive shaft (30) of the robot in order to drive said dome (1) at the normal speed of rotation of the robot, usually within the range of 2000 to 2500 revolutions per minute.

9. Domestic robot in accordance with claim 8, characterized in that the base (20) of the accessory on which the dome (1) is mounted has a lug (42) which is intended to close a safety contact (43) placed on the body of the robot when the above-mentioned base is suitably positioned and locked on the vessel (35) of the robot.

10. Citrus-fruit squeezer in accordance with one of claims 1 to 7 or domestic robot in accordance with either claim 8 or claim 9, characterized in that it has a removable cap (51) hollowed-out internally and provided with a gripping element (53) which serves to maintain the citrus fruit applied on the dome (1).

FIG.1

FIG.2

FIG.3

FIG.5

FIG.4

FIG.6

FIG.7

# FIG.8

FIG.9